# EUROPEAN PATENT APPLICATION

(11) **EP 3 477 256 A1**
(43) Date of publication of application: **01.05.2019**
(21) Application number: 18178032.1
(22) Date of filing: 15.06.2018
(51) Int. Cl.: G01B 11/245, G01B 11/25, H04N 13/271, G01J 3/46, G01B 11/00

(54) **THREE-DIMENSIONAL MEASUREMENT DEVICE WITH COLOR CAMERA**

(30) Priority: 19.06.2017 US 201762521620 P; 19.03.2018 US 201815924879
(71) Applicant: Faro Technologies, Inc., Lake Mary, FL 32746-6204 (US)
(72) Inventor: Döring, Daniel, 71254 Ditzingen (DE); Hillebrand, Gerrit, 71332 Waiblingen (DE); Becker, Reinhard, 71642 Ludwigsburg (DE); Ossig, Martin, 71732 Tamm (DE); Arezone, Joseph A., Cleveland Heights, Ohio 44106 (US)
(74) Representative: Siecker, Eric Johannes

(57) **Abstract**

A three-dimensional, 3D, measurement system and a method are provided. The system includes a noncontact measurement device that measures a distance from the noncontact measurement device to a surface. The device includes a projector that emits a light pattern. A measurement camera is coupled to the noncontact measurement device. A first color camera is provided having a first quality parameter. A second color camera is coupled to the device, the second color camera having a second quality parameter, the second quality parameter being larger than the first quality parameter. One or more processors are operably coupled to the noncontact measurement device that determine 3D coordinates of at least one point in a field of view and selectively acquiring an image with the second color camera.

## Description

### CROSS REFERENCE TO RELATED APPLICATIONS

This application claims the benefit of U.S. Provisional Application Serial No. 62/521,620 filed June 19, 2017**,** the entire disclosure of which is incorporated herein by reference.

### BACKGROUND

The subject matter disclosed herein relates to a three-dimensional (3D) measurement device, and in particular to a 3D measurement device operable to selectively acquire high quality color images.

A 3D imager is a portable device includes a projector that projects light patterns on the surface of an object to be scanned. Typically the projector emits a coded or uncoded pattern. One (or more) cameras, having a predetermined positions and alignment relative to the projector, which record images of the light pattern on the surface of an object. The three-dimensional coordinates of elements in the light pattern can be determined by trigonometric methods, such as by using epipolar geometry. Other types of noncontact devices may also be used to measure 3D coordinates, such as those that use time of flight techniques (e.g. laser trackers, laser scanners or time of flight cameras) for measuring the amount of time it takes for light to travel to the surface and return to the device.

These 3D imagers often have an additional color camera that is used for tracking the position of the 3D imager, the colorizing (texture) of the 3D point cloud or provide a visual feedback to the operator during scanning. It should be appreciated that to reduce processing and storage loading, the color camera acquires images at a relatively low resolution, such as 1.3 megapixels for example. The low resolution images allow the 3D imager to perform the intended function (e.g. tracking, colorizing or visualization feedback) without unnecessarily using large amounts of memory or slowing down the processor of the 3D imager. Further, typically, the color camera uses a global shutter camera sensor where the smallest achievable pixel size is larger than for a rolling shutter camera.

In some applications, it may be desirable to acquire high resolution or high quality images of the scene or portions of the scanned area. For example, in a crime scene investigation, the investigator may use a high resolution DSLR camera to take photographs of areas they believe needs to be documented further, such as evidence for example. As a result, the high quality photographs are acquired and stored separately from the 3D point cloud generated by the 3D imager.

Accordingly, while existing 3D imagers are suitable for their intended purpose the need for improvement remains, particularly in providing a system for acquiring high quality images during a scanning process.

### BRIEF DESCRIPTION

According to one aspect of the disclosure, a three-dimensional (3D) measurement system is provided. The measurement system includes a noncontact measurement device operable to measure a distance from the noncontact measurement device to a surface. The noncontact measurement device includes a projector that emits a light pattern. A measurement camera is operably coupled to the noncontact measurement device. A first color camera is provided having a first quality parameter. A second color camera is operably coupled to the noncontact measurement device, the second color camera having a second quality parameter, the second quality parameter being larger than the first quality parameter. One or more processors are operably coupled to the noncontact measurement device, the one or more processors operable to execute computer instructions when executed on the processor for determining 3D coordinates of at least one point in a field of view and selectively acquiring an image with the second color camera.

According to another aspect of the disclosure, a method is provided. The method includes emitting a pattern of light with a projector of a noncontact measurement device. Point data is acquired about a plurality of points on a surface with a measurement camera of a noncontact measurement device. A first color image of the surface is acquired with a first color camera of the noncontact measurement device, the first color camera having a first quality parameter. 3D coordinates of the plurality of points are determined based at least in part on the point data and the baseline distance between the projector and the measurement camera. A second color image of the surface is selectively acquired with a second color camera in response to an input from an operator, the high quality camera being operably coupled to the noncontact measurement device and having a second quality parameter, the second quality parameter being different than the first quality parameter.

According to yet another aspect of the disclosure, a computer program product for determining three dimensional coordinates using a noncontact measurement device is provided. The computer program product comprises a nontransitory computer readable storage medium having program instructions embodied therewith, the program instructions executable by a processor to cause the processor to perform: emitting a pattern of light with a projector of a noncontact measurement device; acquiring point data about a plurality of points on a surface with a measurement camera of a noncontact measurement device, acquiring a first color image of the surface with a first color camera of the noncontact measurement device, the first color camera having a first quality parameter; determining 3D coordinates of the plurality of points based at least in part on the point data and the baseline distance between the projector and the measurement camera; selectively acquiring a second color image of the surface with a second color camera in response to an input from an operator, the high quality camera being operably coupled to the noncontact measurement device and having a second quality parameter, the second quality parameter being different than the first quality parameter.

In an embodiment the computer program product further comprises registering the second color image to the at least one of the plurality of points. In an embodiment the computer program product further comprises associating color data from the second color image to a portion of the plurality of points. In an embodiment of the computer program product the plurality of points includes a first plurality of points and a second plurality of points. In an embodiment the computer program product further comprises determining an area of interest from the image; registering the first plurality of points with the area of interest; and deleting the second plurality of points. In an embodiment the computer program product further comprises determining a surface of interest based at least in part on the image; determining a point density of the surface of interest after an initial scan with the noncontact measurement device; and displaying an indicator of the point density on a user interface, the user interface being operably coupled to the noncontact measurement device. In an embodiment the computer program product further comprises comparing the point density of the surface of interest to a threshold; displaying a first indicator on the user interface for a first portion of the surface of interest that are less than the threshold; and displaying a second indicator on the user interface for a second portion of the surface of interest that is greater than the threshold.

According to yet another aspect of the disclosure, a three-dimensional (3D) measurement system is provided. The measurement system includes a noncontact measurement device operable to measure a distance from the noncontact measurement device to a surface. The noncontact measurement device includes a projector that emits a light pattern. A measurement camera is operably coupled to the noncontact measurement device. A color camera is provided. One or more processors are operably coupled to the noncontact measurement device, the one or more processors operable to execute computer instructions when executed on the processor for: selectively acquiring an image with the color camera; determining 3D coordinates of at least one point in a field of view and determining a position registration through optical tracking based at least in part on the image, wherein the at least one point includes a plurality of points, the plurality of points includes a first plurality of points and a second plurality of points; determining an area of interest from the image and registers the first plurality of points with the area of interest; and deleting the second plurality of points.

According to yet another aspect of the disclosure, a three-dimensional (3D) measurement system is provided. The measurement system includes a noncontact measurement device operable to measure a distance from the noncontact measurement device to a surface. The noncontact measurement device includes a projector that emits a light pattern; a measurement camera operably coupled to the noncontact measurement device; a color camera operable to selectively operate at a first quality parameter and a second quality parameter; a user-interface; and one or more processors operably coupled to the noncontact measurement device, the one or more processors operable to execute computer instructions when executed on the processor for selectively acquiring a first image with the color camera operating at the first quality parameter; selectively acquiring a second image with the color camera operating at the second quality parameter; determining 3D coordinates of at least one point in a field of view and determining a position registration through optical tracking based at least in part on the image.

In an embodiment of the system the processor is further operable to: determine a surface of interest based at least in part on the image; determine a point density of the surface of interest after an initial scan with the noncontact measurement device; and displaying an indicator of the point density on the user interface. In an embodiment of the system the processor is further operable to: compare the point density of the surface of interest to a threshold; display a first indicator on the user interface for a first portion of the surface of interest that are less than the threshold; and display a second indicator on the user interface for a second portion of the surface of interest that is greater than the threshold.

These and other advantages and features will become more apparent from the following description taken in conjunction with the drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIGS. 1 - 3 are views of 3D imager systems in accordance with one or more embodiments of the invention;
FIG. 4 and FIG. 5 are schematic illustrations of the principle of operation of the 3D imagers of FIGS. 1-3;
FIG. 6 is an illustration of a 3D imager acquiring a high quality image in accordance with an embodiment;
FIG. 7 is an illustration of a user interface coupled to a 3D imager in accordance with an embodiment;
FIG. 8 is an illustration of a 3D imager acquiring multiple high quality images in accordance with an embodiment;
FIGS. 9-11 are flow diagrams of methods of operating a 3D imager, in accordance with an embodiment;
FIG. 12 is an illustration of a user interface coupled to a 3D imager in accordance with another embodiment; and
FIG. 13 is a flow diagram of a method of displaying an indication of surface density in accordance with an embodiment.

The detailed description explains embodiments of the disclosure, together with advantages and features, by way of example with reference to the drawings.

### DETAILED DESCRIPTION

Embodiments of the invention provide for a three-dimensional (3D) measurement device that acquires high quality images during a scanning process. Embodiments disclosed herein further provide for integrating high quality images into a point cloud acquired by the 3D imager. Further embodiments disclosed herein provide for selectively coloring (texture) of the point cloud using high quality images. Still further embodiments disclosed herein provide for the automatic removal of points in the point cloud that are outside of an area of interest based on high quality images acquired by the 3D imager. Still further embodiments provide feedback to a user on the density of the point cloud based on high quality images acquired by the 3D imager.

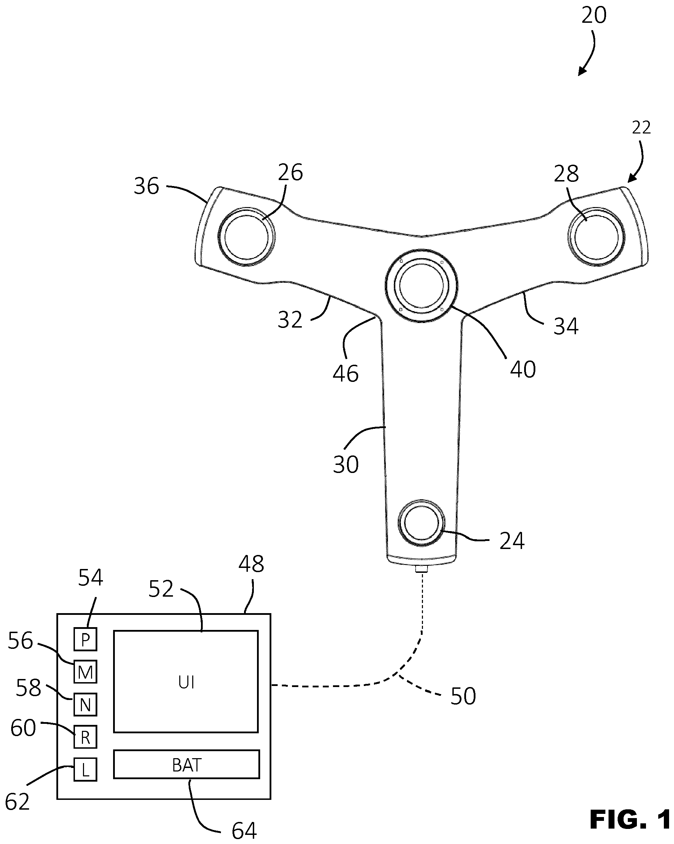

Referring now to FIG. 1, a measurement device, such as 3D imager system 20, is shown for determining 3D coordinates of surfaces in an environment. The system 20 includes an image scanner 22 having a projector 24, a first camera 26 and a second camera 28. In the exemplary embodiment, the projector 24, and cameras 26, 28 are each disposed in separate arms 30, 32, 34 of a housing 36 respectively. A color camera 40 may be centrally disposed on the housing 36 between the arms 30, 32, 34. In the exemplary embodiment, the color camera 40 has a field of view that acquires images, including color information, of the environment being scanned. In an embodiment, the color camera 40 may be used to provide color (texture) information for incorporation into the 3D image. In some embodiments, the camera 40 acquires a video image may be used to register multiple 3D images through the use of videogrammetry. The color camera 40 is sometimes referred to as an RGB camera.

In this embodiment, the color camera 40 is configured to be selectively changed between a first quality parameter that acquires a low quality image, such as an image having a resolution equal to or less than about 1.3 - 5 megapixels, and a second quality parameter that acquires a high quality image, such as an image having a resolution equal to or greater than about 10 megapixels. It should be appreciated that while embodiments herein describe the quality parameter based on image or sensor resolution, this is for exemplary purposes and the claims should not be so limited. In other embodiments the quality parameter may be based on other attributes of the color camera 40.

As discussed in more detail herein, in an embodiment the projector 24 projects a pattern of light onto a surface in the environment. As used herein, the term "projector" is defined to generally refer to a device for producing a pattern. The generation of the pattern can take place by means of deflecting methods, such as generation by means of diffractive optical elements or micro-lenses (or single lasers), or by shading methods, for example the production by means of shutters, transparencies (as they would be used in a transparency projector) and other masks. The deflecting methods have the advantage of less light getting lost and consequently a higher intensity being available.

The cameras 26, 28 acquire images of the pattern and in some instances able to determine the 3D coordinates of points on the surface using trigonometric principles, e.g. epipolar geometry. In an embodiment, the cameras 26, 28 are sensitive to monochromatic light, such as light in the infrared (IR) spectrum.

It should be appreciated that while the illustrated embodiments show and describe the device that determines 3D coordinates as being an image scanner, this is for exemplary purposes and the claimed invention should not be so limited. In other embodiments, devices that use other noncontact means for measuring 3D coordinates may also be used, such as a laser scanner device that uses time-of-flight to determine the distance to the surface.

A controller 48 is coupled for communication to the projector 24, cameras 26, 28, 40 and in an embodiment the high quality camera 47. The connection may be a wired connection 50 or a wireless connection. The controller 48 is a suitable electronic device capable of accepting data and instructions, executing the instructions to process the data, and presenting the results. Controller 48 may accept instructions through user interface 52, or through other means such as but not limited to electronic data card, voice activation means, manually-operable selection and control means, radiated wavelength and electronic or electrical transfer.

Controller 48 uses signals act as input to various processes for controlling the system 20. The digital signals represent one or more system 20 data including but not limited to images acquired by cameras 26, 28, 40, temperature, ambient light levels, operator inputs via user interface 52 and the like.

Controller 48 is operably coupled with one or more components of system 20 by data transmission media 50. Data transmission media 50 includes, but is not limited to, twisted pair wiring, coaxial cable, and fiber optic cable. Data transmission media 50 also includes, but is not limited to, wireless, radio and infrared signal transmission systems. Controller 48 is configured to provide operating signals to these components and to receive data from these components via data transmission media 50.

In general, controller 48 accepts data from cameras 26, 28, 40, projector 24 and a light source, and is given certain instructions for the purpose of determining the 3D coordinates of points on surfaces being scanned. The controller 48 may compare the operational parameters to predetermined variances and if the predetermined variance is exceeded, generates a signal that may be used to indicate an alarm to an operator or to a remote computer via a network. Additionally, the signal may initiate other control methods that adapt the operation of the system 20 such as changing the operational state of cameras 26, 28, 40, projector 24 or light source 42 to compensate for the out of variance operating parameter. Still other control methods may display, highlight in the display or otherwise notify the operator when a low point density is detected.

The data received from cameras 26, 28, 40 may be displayed on a user interface 52. The user interface 52 may be an LED (light-emitting diode) display, an LCD (liquid-crystal diode) display, a CRT (cathode ray tube) display, a touch-screen display or the like. A keypad may also be coupled to the user interface for providing data input to controller 38. In an embodiment, the controller 48 displays in the user interface 52 a point cloud to visually represent the acquired 3D coordinates.

In addition to being coupled to one or more components within system 20, controller 48 may also be coupled to external computer networks such as a local area network (LAN) and the Internet. A LAN interconnects one or more remote computers, which are configured to communicate with controller 48 using a well-known computer communications protocol such as TCP/IP (Transmission Control Protocol/Internet(^) Protocol), RS-232, ModBus, and the like. Additional systems 20 may also be connected to LAN with the controllers 48 in each of these systems 20 being configured to send and receive data to and from remote computers and other systems 20. The LAN is connected to the Internet. This connection allows controller 48 to communicate with one or more remote computers connected to the Internet.

Controller 48 includes a processor 54 coupled to a random access memory (RAM) device 56 , a non-volatile memory (NVM) device 58 , a read-only memory (ROM) device 60 , one or more input/output (I/O) controllers, and a LAN interface device 62 via a data communications bus.

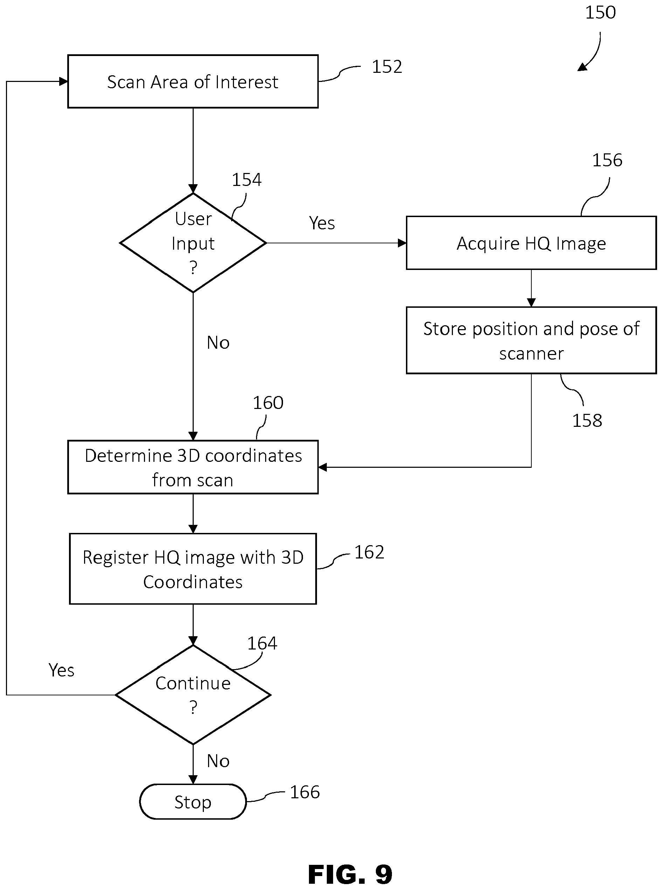

LAN interface device 62 provides for communication between controller 48 and a network in a data communications protocol supported by the network. ROM device 60 stores an application code, e.g., main functionality firmware, including initializing parameters, and boot code, for processor 54. Application code also includes program instructions as shown in FIGS. 9-11 and FIG. 13 for causing processor 54 to execute any system 20 operation control methods, including starting and stopping operation, changing operational states of projector 24 and color camera 40, monitoring predetermined operating parameters, and generation of alarms. In an embodiment, the application code creates an onboard telemetry system may be used to transmit operating information between the system 20 and one or more remote computers or receiving locations. The information to be exchanged remote computers and the controller 48 include but are not limited to 3D coordinate data and images.

NVM device 58 is any form of non-volatile memory such as an EPROM (Erasable Programmable Read Only Memory) chip, a disk drive, or the like. Stored in NVM device 58 are various operational parameters for the application code. The various operational parameters can be input to NVM device 58 either locally, using a user interface 52 or remote computer, or remotely via the Internet using a remote computer. It will be recognized that application code can be stored in NVM device 58 rather than ROM device 60.

Controller 48 includes operation control methods embodied in application code such as that shown in FIGS. 9-11 and FIG. 13. These methods are embodied in computer instructions written to be executed by processor 54, typically in the form of software. The software can be encoded in any language, including, but not limited to, assembly language, VHDL (Verilog Hardware Description Language), VHSIC HDL (Very High Speed IC Hardware Description Language), Fortran (formula translation), C, C++, Visual C++, C#, Objective-C, Java, Javascript ALGOL (algorithmic language), BASIC (beginners all-purpose symbolic instruction code), visual BASIC, ActiveX, HTML (HyperText Markup Language), Python, Ruby and any combination or derivative of at least one of the foregoing. Additionally, an operator can use an existing software application such as a spreadsheet or database and correlate various cells with the variables enumerated in the algorithms. Furthermore, the software can be independent of other software or dependent upon other software, such as in the form of integrated software.

In an embodiment, the controller 48 further includes an energy source, such as battery 64. The battery 64 may be an electrochemical device that provides electrical power for the controller 48. In an embodiment, the battery 64 may also provide electrical power to the cameras 26, 28, 40, the projector 24 and the high quality camera 47. In some embodiments, the battery 64 may be separate from the controller (e.g. a battery pack). In an embodiment, a second battery (not shown) may be disposed in the housing 36 to provide electrical power to the cameras 26, 28, 40 and projector 24. In still further embodiments, the light source 42 may have a separate energy source (e.g. a battery pack).

It should be appreciated that while the controller 48 is illustrated as being separate from the housing 36, this is for exemplary purposes and the claimed invention should not be so limited. In other embodiments, the controller 48 is integrated into the housing 36.

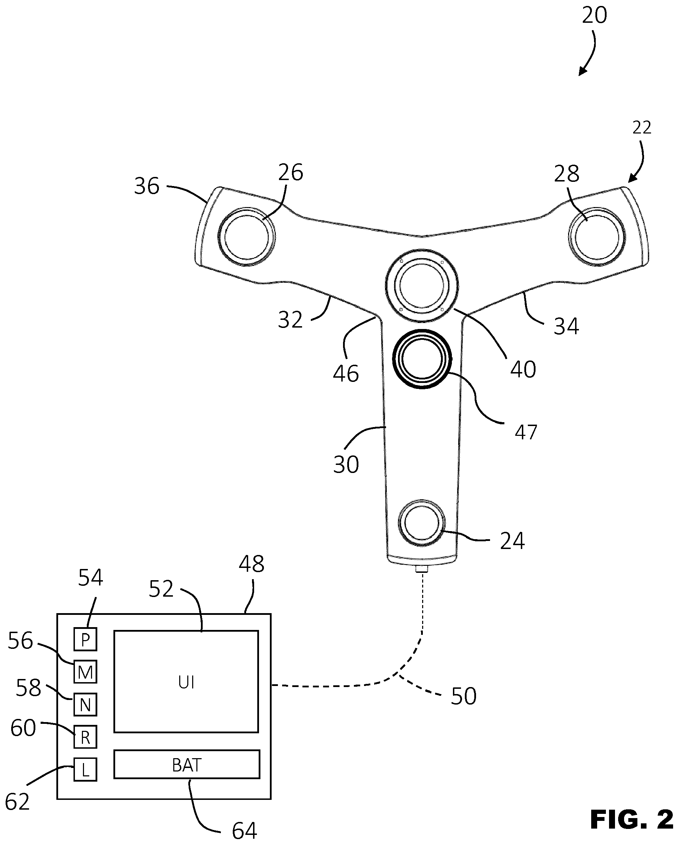

Referring now to FIG. 2, another embodiment of the image scanner 22 is shown having a second color camera 47. In this embodiment, the color camera 40 acquires color images at a first quality parameter/level and the second color camera 47 acquires color images at a second quality parameter/level. The quality parameter of the cameras 40, 47 may be defined in terms of resolution (megapixels). In this embodiment, the second color camera 47 is integrated into the housing 36. In some embodiments, the position of the second color camera 47 is in a predetermined geometrical relationship to the first color camera 40, the projector 24 or the cameras 26, 28.

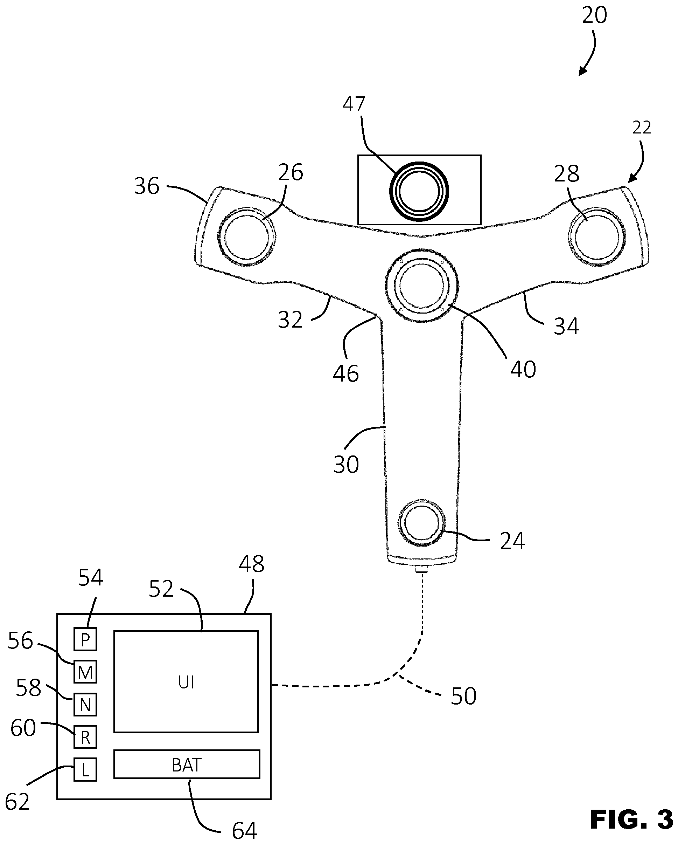

Referring now to FIG.3, yet another embodiment of the image scanner 22 is shown having a second color camera 47.. In this embodiment, the color camera 40 acquires color images at a first quality parameter/level and the second color camera 47 acquires color images at a second quality parameter/level. The quality parameter of the cameras 40, 47 may be defined in terms of resolution (megapixels). In this embodiment, the second color camera 47 is an external camera that is rigidly coupled to the housing 36. The second color camera 47 may be coupled to the housing 36 by a mechanical structure, such as a bracket for example. In an embodiment the second color camera 47 is removably coupled to the housing.

As will be discussed in more detail herein, the second color camera 47, or the color camera 40 in high quality mode of operation, may be used in combination with the measured 3D coordinate data to improve or enhance the point cloud data. As used herein, a point cloud is a collection or a set of data points in a coordinate system. In a three-dimensional coordinate system, these points are usually defined by X, Y, and Z coordinates, and represent the external surface of an object that is scanned with the system 20.

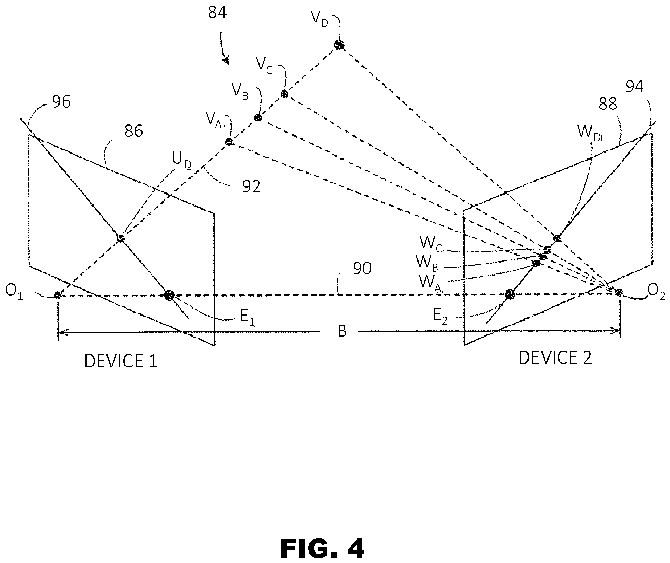

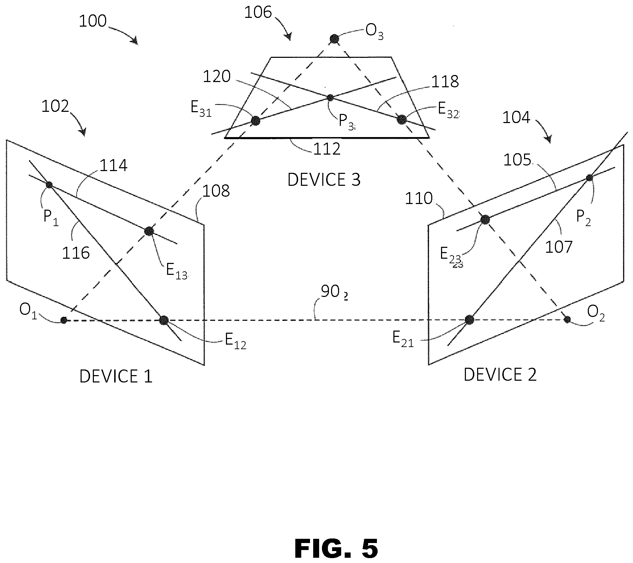

Referring now to FIG. 4 and FIG. 5, an embodiment is shown of a method of determining the 3D coordinates of the data points in the point cloud using the image scanner 22. In the illustrated embodiment, the projector 24 and cameras 26, 28 are arranged spaced apart in a triangular arrangement where the relative distances and positions between the components is known. The triangular arrangement is advantageous in providing information beyond that available for two cameras and a projector arranged in a straight line or from a system with a projector and a single camera. The additional information may be understood in reference to FIG. 4, which explain the concept of epipolar constraints, and FIG. 5 that explains how epipolar constraints are advantageously applied to the triangular arrangement of the system 20. In FIG. 4, a 3D triangulation instrument 84 includes a device 1 and a device 2 on the left and right sides as view from the viewpoint of FIG. 4, respectively. Device 1 and device 2 may be two cameras or device 1 and device 2 may be one camera and one projector. Each of the two devices, whether a camera or a projector, has a perspective center, O₁ and O₂, and a representative plane, 86 or 88. The perspective centers are separated by a baseline distance B, which is the length of the line 90. The perspective centers O₁, O₂ are points through which rays of light may be considered to travel, either to or from a point on a surface in the area of the environment being scanned. These rays of light either emerge from an illuminated projector pattern or impinge on a photosensitive array. The placement of the reference planes 86, 88 is applied in FIG. 4, which shows the reference planes 86, 88 between the object point and the perspective centers O₁, O₂.

In FIG. 4, for the reference plane 86 angled toward the perspective center O₂ and the reference plane 88 angled toward the perspective center O₁, a line 90 drawn between the perspective centers O₁ and O₂ crosses the planes 86 and 88 at the epipole points E₁, E₂, respectively. Consider a point U_{D} on the plane 86. If device 1 is a camera, it is known that an object point that produces the point U_{D} on the image lies on the line 92. The object point might be, for example, one of the points V_{A}, V_{B}, V_{C}, or V_{D}. These four object points correspond to the points W_{A}, W_{B}, W_{C}, W_{D}, respectively, on the reference plane 88 of device 2. This is true whether device 2 is a camera or a projector. It is also true that the four points lie on a straight line 94 in the plane 88. This line, which is the line of intersection of the reference plane 88 with the plane of O₁-O₂-U_{D}, is referred to as the epipolar line 94. It follows that any epipolar line on the reference plane 88 passes through the epipole E₂. Just as there is an epipolar line on the reference plane of device 2 for any point on the reference plane of device 1, there is also an epipolar line 96 on the reference plane of device 1 for any point on the reference plane of device 2.

FIG. 5 illustrates the epipolar relationships for a 3D imager 100 corresponding to triangulation instrument 84 of FIG. 4 in which two cameras and one projector are arranged in a triangular pattern. In general, the device 1, device 2, and device 3 may be any combination of cameras and projectors as long as at least one of the devices is a camera. Each of the three devices 102, 104, 106 has a perspective center O₁, O₂, O₃, respectively, and a reference plane 108, 110, and 112, respectively. Each pair of devices has a pair of epipoles. Device 1 and device 2 have epipoles E₁₂, E₂₁ on the planes 108, 110, respectively. Device 1 and device 3 have epipoles E₁₃, E₃₁, respectively on the planes 108, 112, respectively. Device 2 and device 3 have epipoles E₂₃, E₃₂ on the planes 110, 112, respectively. In other words, each reference plane includes two epipoles. The reference plane for device 1 includes epipoles E₁₂ and E₁₃. The reference plane for device 2 includes epipoles E₂₁ and E₂₃. The reference plane for device 3 includes epipoles E₃₁ and E₃₂.

Consider the embodiment of FIG. 5 in which device 3 is a projector, device 1 is a first camera, and device 2 is a second camera. Suppose that a projection point P₃, a first image point P₁, and a second image point P₂ are obtained in a measurement. These results can be checked for consistency in the following way.

To check the consistency of the image point P₁, intersect the plane P₃-E₃₁-E₁₃ with the reference plane 108 to obtain the epipolar line 114. Intersect the plane P₂-E₂₁-E₁₂ to obtain the epipolar line 116. If the image point P₁ has been determined consistently, the observed image point P₁ will lie on the intersection of the determined epipolar line 114 and line 116.

To check the consistency of the image point P₂, intersect the plane P₃-E₃₂-E₂₃ with the reference plane 110 to obtain the epipolar line 105. Intersect the plane P₁-E₁₂-E₂₁ to obtain the epipolar line 107. If the image point P₂ has been determined consistently, the observed image point P₂ will lie on the intersection of the determined epipolar lines 107 and 105.

To check the consistency of the projection point P₃, intersect the plane P₂-E₂₃-E₃₂ with the reference plane 110 to obtain the epipolar line 118. Intersect the plane P₁-E₁₃-E₃₁ to obtain the epipolar line 120. If the projection point P₃ has been determined consistently, the projection point P₃ will lie on the intersection of the determined epipolar line 118 and line 120.

The redundancy of information provided by using a 3D imager 100 having a triangular arrangement of projector and cameras may be used to reduce measurement time, to identify errors, and to automatically update compensation/calibration parameters. It should be appreciated that based on the epipolar geometry relationships described herein, the distance from the image scanner 22 to points on the surface being scanned may be determined. By moving the image scanner 22, the determination of the pose/orientation of the image scanner, and a registration process the three dimensional coordinates of locations (point data) on a surface may be determined and the point cloud generated.

It should be appreciated that since the cameras 26, 28 are sensitive to monochromatic light (e.g. in the infrared spectrum), the measured 3D coordinate points do not include color or texture information. In an embodiment, as the 3D coordinates are measured and determined, the image scanner 22 also acquires color images of the scene being scanned with the color camera 40. In one embodiment, the color data from the images acquired by color camera 40 is merged with the measured 3D coordinate data. In order to obtain a 3D point cloud of the scanned object, each image shot/frame is registered, in other words the three-dimensional coordinates obtained in each image frame is inserted in a common coordinate system. Registration is possible, for example, by videogrammetry, i.e., for example, "structure from motion" (SFM) or "simultaneous localisation and mapping" (SLAM). The natural texture of the scanned objects or environment can also be used for common points of reference, or a separate stationary pattern can be produced. The natural texture can be captured by the color camera 113 in addition to obtaining the color information. This allows the color information to be associated with each of the measured 3D coordinates. In one embodiment, the pose of the first color camera 40 and the second color camera 47 is known in relation to the pose of the projector 24 and the cameras 26, 28 and since the characteristics/parameters of the color camera are known (e.g. focal length), the two-dimensional (2D) color data may be merged with the measured 3D coordinate data/points by projecting the rays that enter the 2D color cameras 40, 47 onto the measured 3D coordinate data/points.

It should be appreciated that since the color camera 40 acquires images at a rapid rate during the scanning operation, the quality level of the color image (e.g. resolution) may be lower than that desired for the purpose of documenting the scene. For example, in an embodiment the system 20 is used to scan a crime scene to document the position of different objects or evidence in the area where the crime was committed. In addition to the positions, sizes and coordinates of the objects, the investigator is also likely to desire high quality (e.g. high resolution) images to document small details for later analysis. It should be appreciated that the color camera is operated at a lower quality level in order to reduce the amount of electronic memory, storage used or processing resources (e.g. CPU) for the color images. Further, in some embodiments, the color camera 40 has a global-shutter type of sensor (i.e. all pixels exposed at the same time) and the color camera 47 has a rolling-shutter type of sensor (i.e. time shift between the exposures of different pixel rows). Compared to a rolling shutter type of sensor, sensors with a global shutter are more limited regarding the minimum achievable pixel size. However, the global-shutter sensor is desired for improved position registration through optical tracking. Thus in some embodiments the use of a second color camera with a rolling-shutter type sensor provides advantages in allowing higher resolution.

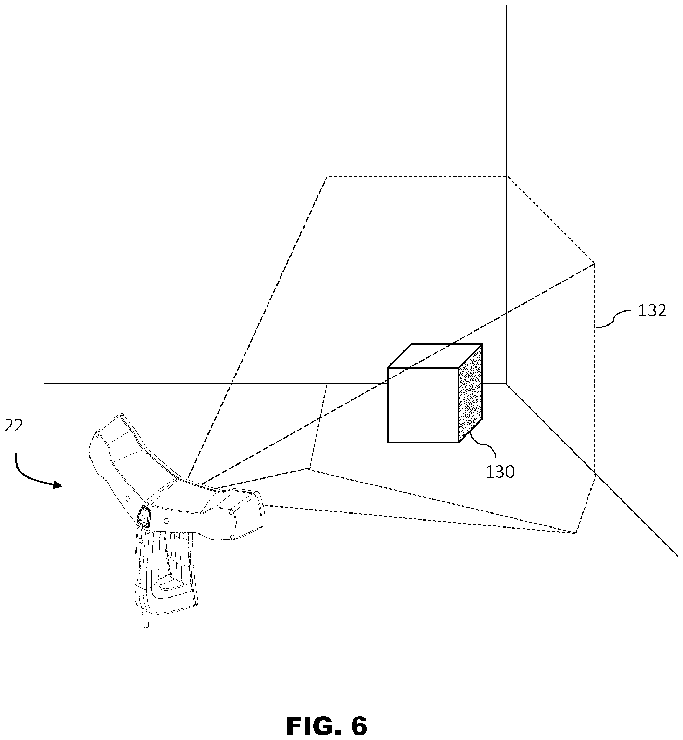

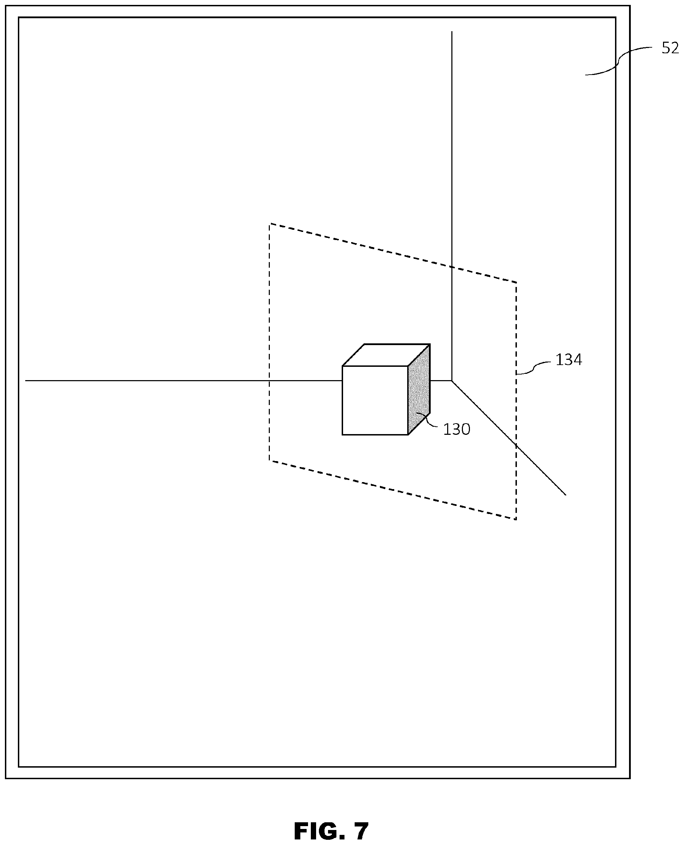

Referring now to FIG. 6 and FIG. 7 an embodiment is shown of system 20 using an imager 22 having a color camera, such as color camera 40, 47 for example, that may be configured to acquire high quality images, such as images having a resolution equal to or greater than about 10 megapixels. In an embodiment, the system 20 is configured to selectively acquire a high quality (e.g. resolution) image using the color camera 47 or the color camera 40 in a high quality mode. For example, during the scanning of an area, the operator desires to document an area with a high resolution image, such as the object 130. The operator then changes the position and pose of the image scanner 22 to place the object within the field of view 132 of the color camera 40, 47. The operator then initiates the high quality color camera 40, 47 and acquires an image of the area within the field of view 132. In one embodiment, the activation of the high quality camera 40, 47 may be through an actuator on the image scanner 22 or via the user interface 52.

When the image is acquired, the position and pose information of the image scanner 22 is stored and associated with the image. This allows the image 134 (FIG. 7) to be displayed in the user interface 52 with the image 134 arranged in the proper orientation and position based on the position and pose of the image scanner 22 during acquisition of the image. In some embodiments, the system 20 will display an icon or other symbol at the location in the point cloud to indicate that a high quality image of that location is available and may be viewed by selecting the icon or symbol with the user interface 52. It should be appreciated that while embodiments herein refer to viewing of the point cloud or the high quality images using the user interface 52 of controller 48, this is for exemplary purposes and the claims should not be so limited. In other embodiments the point cloud data, including the high quality images, may be transmitted to one or more computers, remote computers, computer servers, or computer nodes. In an embodiment the point cloud data, including any high quality images, may be viewed by any computing device that receives the point cloud data.

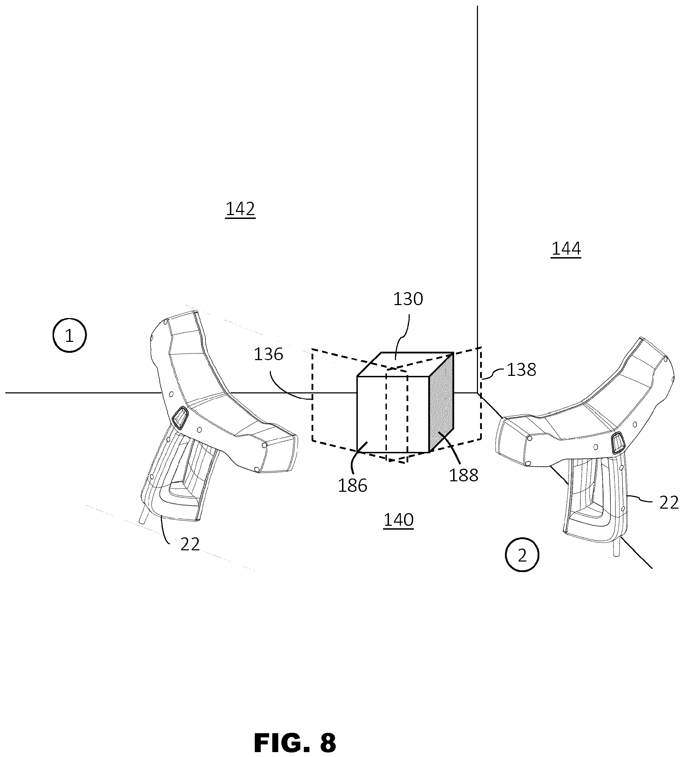

Referring now to FIG. 8, another embodiment is shown of the system 20 where an area or object of interest may be identified by the user and measured 3D coordinate points outside of the area or object of interest may be eliminated from the point cloud. Is should be appreciated that the removal of points that are outside the area or object of interest will improve the visualization for the user, reduce the amount of electronic memory or storage used for the point cloud, and also improve the performance of the controller 48. In this embodiment, the image scanner 22 is moved from a first position to a second position while scanning the object 130. In one embodiment, the operator activates the high quality color camera 47 at the first position to acquire a first image 136 of the area or object of interest (e.g. object 130), and then acquires one or more further high quality images of the area or object of interest, such as image 138 for example, during the scan.

From these high quality images, the area or object of interest, such as object 130 for example, may be identified. In one embodiment, the object 130 is manually identified by the user on the user interface, such as by tracing the outline of the object 130 on the user interface 52. In other embodiments, the object 130 may be automatically identified by the controller 48 using edge matching processes (e.g. the Canny edge detection method), greyscale matching methods, gradient matching methods, blob detection, or object template matching for example. In other embodiments, the object 130 may be identified using feature-based methods (e.g. surface patches, corners, linear edges). In still other embodiments, the object 130 may be compared to electronic object models, such as computer-aided-design (CAD) models for example. Once the object 130 is detected, the measured 3D coordinates of points that are not on the surfaces of object 130, such as points on the surface 140, 142, 144 for example, are removed from the point cloud data.

In another embodiment, an area of interest is identified based on identifying common surfaces that are located in each of the high quality color camera 147 images (e.g. a Boolean combined operation), such as images 136, 138 for example. In still another embodiment, an area of interest is identified from the accumulation of surfaces that are located within the high quality color camera 147 images (e.g. a Boolean union operation).

Referring now to FIG. 9, with continuing reference to FIG. 6 and FIG. 7, a method 150 is shown for acquiring high quality color images and merging the images with the measured 3D coordinate data in a point cloud. The method 150 starts in block 152 by initiating a scan. The method then proceeds to query block 154 where it is determined whether there has been a user input indicating that a high quality image was desired, such as by activating a button on the image scanner 22 or via the user interface 52 for example. When query block 154 returns a positive, the method 150 proceeds to block 156 where the high quality image is acquired by the camera 40, 47. The method 150 then proceeds to store the high quality image along with the position and pose of the image scanner 22 in block 158.

After storing the position and pose, or when the query block 154 returns a negative, the method 150 proceeds to block 160 where the measured 3D coordinate points are determined based at least in part on the light pattern projected by the projector 24 and from the images of the light pattern on surfaces acquired by cameras 26, 28. The method 150 then proceeds to block 162 where the high quality image acquired in block 156 is registered to the measured 3D coordinate points based on position and pose of the image scanner 22 determined in block 158. The method 150 then proceeds to query block 164 where it is determined whether the user wishes to continue scanning. When the query block 164 returns a positive, the method 150 loops back to block 152. When the query block 164 returns a negative, the method 150 proceeds to stop block 166.

It should be appreciated that while FIG. 9 illustrates the steps of method 150 sequentially, this was for exemplary purposes and the claims should not be so limited. In other embodiments, the steps may be performed in another order, or some steps may be performed in parallel. For example, the determination of the 3D coordinates in block 160 may be performed in parallel with the acquisition of the high quality image in block 156.

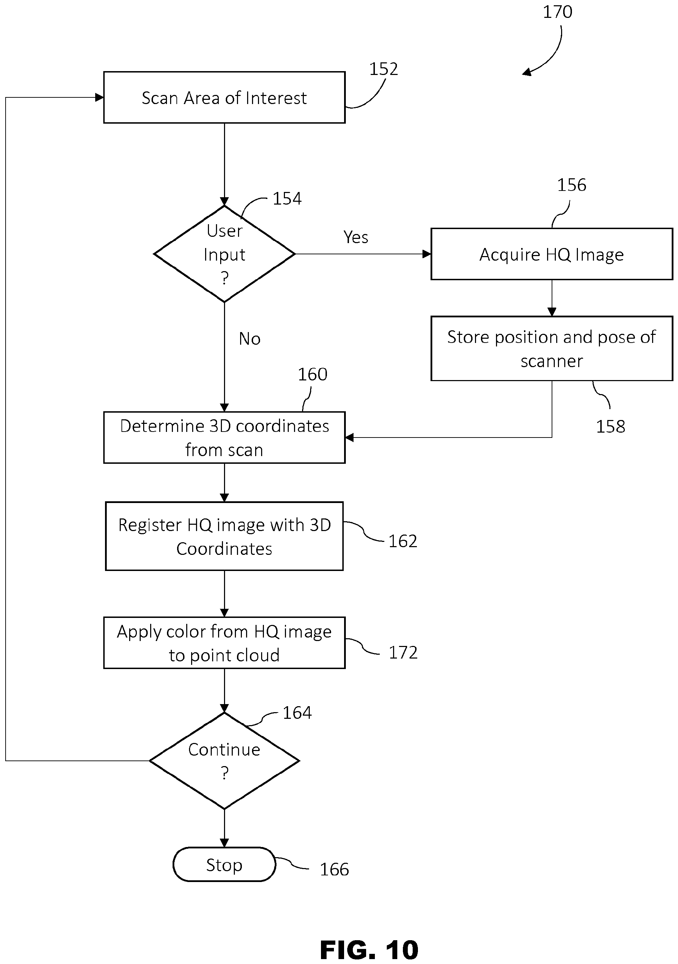

Referring now to FIG. 10, another method 170 is shown for using high quality color images to selectively colorize measured 3D coordinate points in a point cloud. The method 170 is similar to the steps described in FIG. 9 with reference to method 160. The steps of blocks 152-162 that are the same between method 160 and method 170 will not be repeated here for brevity. In this embodiment, the acquisition of the high quality image in block 156 may be performed when the image scanner 22 is directed at an area of interest and a high quality color rendition is desired.

After the registration of the high quality image in block 162, the method 170 proceeds to block 172 where the colors from the high quality image are registered to the measured 3D coordinates. As discussed herein, the merging of the color data with the measured 3D coordinate points may be performed by projecting the rays that enter the 2D color camera 40, 47 onto the measured 3D coordinate data/points.

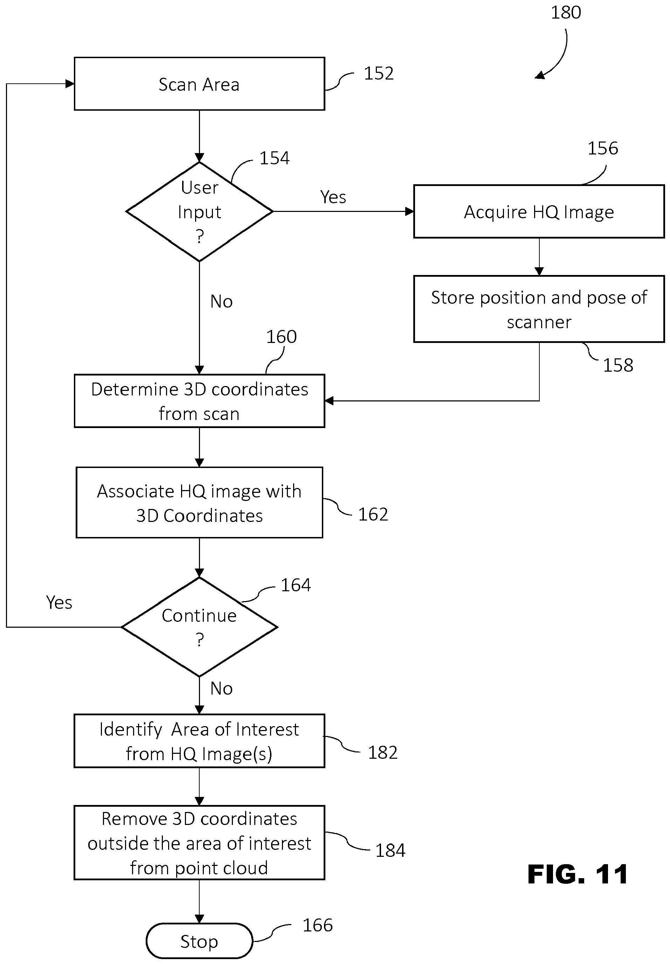

Referring now to FIG. 11, with continuing reference to FIG. 8, another method 180 is shown for using high quality color images to define an area or object or interest and remove undesired 3D coordinate points from the point cloud. The method 170 is similar to the steps described in FIG. 9 with reference to method 160. The steps of blocks 152-162 that are the same between method 160 and method 180 will not be repeated here for brevity. In this embodiment, the acquisition of the high quality image in block 156 may be performed in multiple locations when the user has the image scanner pointing at the area or object of interest.

After the user has completed their scan and acquired at least one, and in some embodiments a plurality, of high quality images of the area or object of interest, the query block 164 returns a negative and the method 180 proceeds to block 182 where the area or object or interest (e.g. object 130 of FIG. 8) is identified from the high quality images. In an embodiment the area or object of interest may be identified manually by the user, such as by tracing an outline of the area or object on the user interface 52 for example. In other embodiments the area or object of interest may be identified automatically as described herein (e.g. Canny edge detection). Once the area or object has been identified, the method 180 proceeds to block 184 where the measured 3D coordinates that are outside of the area or interest, or not on a surface of an object of interest, are identified. The identified external points are then removed or deleted from the point cloud.

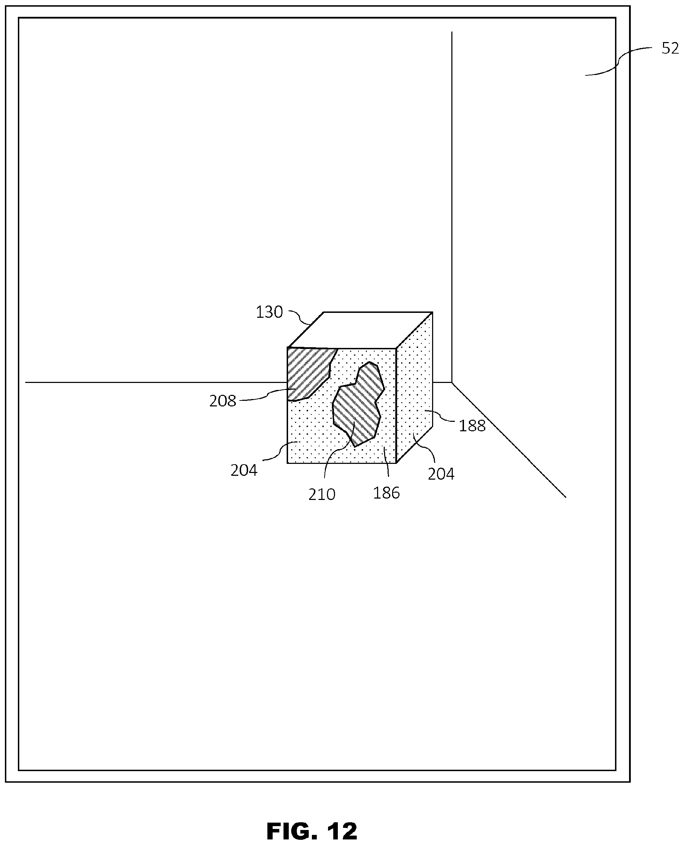

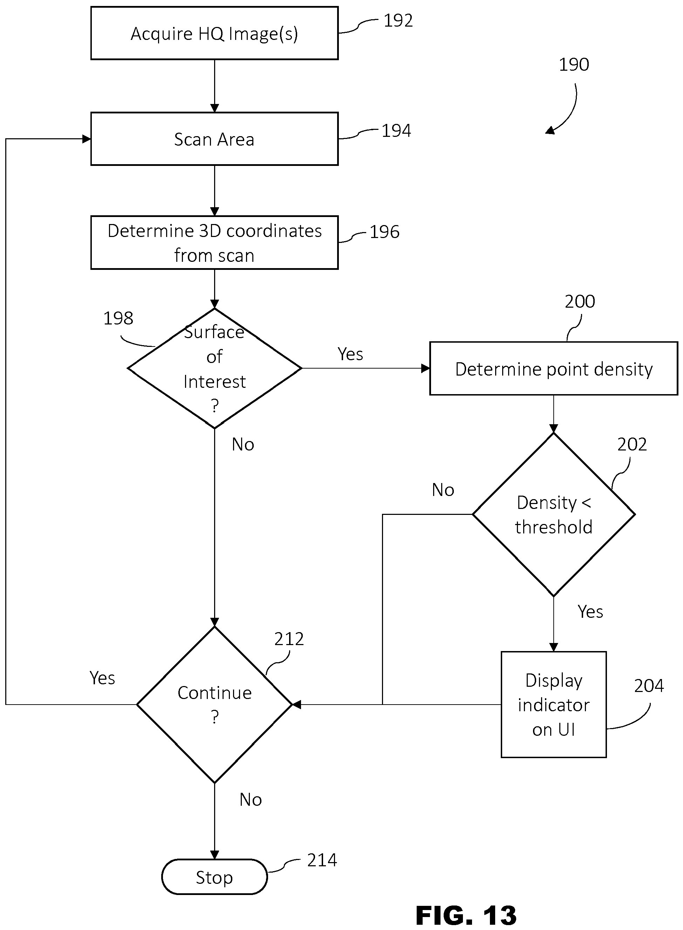

Referring now to FIG. 12 and FIG. 13, with continuing reference to FIG. 8, an embodiment is shown wherein high quality images may be used as a feedback to the user during a scanning operation of the point density of the measured 3D coordinates. The method 190 starts with acquiring high quality images of surfaces of interest to the operator in block 192. In the illustrated embodiment, the operator acquires images of surfaces 186, 188 (FIG. 8) before the scanning is initiated. The operator then proceeds to scan the area with the system 20 in block 194 and determine the measured 3D coordinate points in block 196.

With the measured 3D coordinate points determined the method 190 proceeds to query block 198 where it is determined if the scan includes the surfaces of interest, such as surfaces 186, 188 for example. When query block 198 returns a positive, the method 190 proceeds to block 200 where the point density of the measured 3D coordinates on the surface of interest is determined. This point density is then compared to a threshold in query block 202. In an embodiment, the threshold represents a level, such as a minimum level for example, of density of the measured 3D coordinate points. In one embodiment, the threshold may be user-defined. It should be appreciated that in some embodiments, the point density may be compared to several thresholds (e.g. low, medium, high point density thresholds). When the query block 202 returns a positive, meaning that the point density is below a threshold, the method 190 then proceeds to block 204 where the user interface 52 is changed to provide feedback to the operator on the point density level(s) of the surfaces of interest.

Referring to FIG. 12, an example is shown wherein the operator acquired high quality images of surfaces 186, 188 (FIG. 8) prior to the scan. When the scanning was completed, it was determined that the surface 188 had a point density above the desired threshold. As such, on the user interface the surface 188 may include a first indicator, such as a first color (as indicated by the dotted cross-hatching 206 in FIG. 12) for example. In one embodiment, when the surface of interest has a point density greater than a threshold, the surface is colored green so that the operator is provided feedback that no additional scanning of this surface is needed to obtain the desired results. In the embodiment of FIG. 12, at least a portion of the surface 186 has a point density below a threshold. When the point density is below a threshold, the user interface 52 may be changed to display the surface 186 with a second indicator, such as a second color (as indicated by the first cross-hatched area 208). In an embodiment, when the surface of interest has a point density below a threshold, the surface is colored red so that the operator is provided feedback that additional scanning may be performed to obtain the desired point density.

It should be appreciated that in some embodiments, there may be multiple thresholds. In the embodiment illustrated in FIG. 12, areas of surface 186 may include areas of low density 208 that are below a first threshold, an area of medium density 210 that are between the first threshold and a second threshold, and an area of high density 204 that is above the second threshold. Each of the areas 204, 208, 210 may be indicated on the user interface 52 using a different color.

Once the feedback indicator of point density is displayed on user interface 52, or when the query block 202 returns a negative, the method 190 proceeds to query block 212. In query block 212 it is determined whether the operator desires to continue with additional scanning, such as to scan additional areas or to increase the point density of a surface of interest for example. When query block 212 returns a positive, the method 190 loops back to block 194 and the process continues. When query block 190 returns a negative, the method 190 proceeds to stop block 214.

Technical effects and benefits of some embodiments include the noncontact measurement of three-dimensional coordinates of points on a surface and the acquisition of color images having a high quality parameter/level. The high quality image may be integrated into the point cloud to allow the user to view the measurement data with an additional (e.g. higher) level of detail. The high quality image may be used to improve the merging of color information into portions of the point cloud. The high quality image may further be used to identify the object or area of interest to allow points outside of the object/area of interest to be deleted from the point cloud. The deletion of points from the point cloud may improve the performance of the controller and improve the visualization of the point cloud for the user. The high quality image may still further be used to provide feedback to the operator during the scanning operation to determine whether a desired level of point density has been achieved.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A three-dimensional (3D) measurement system comprising:
a noncontact measurement device operable to measure a distance from the noncontact measurement device to a surface, the noncontact measurement device including:
a projector that emits a light pattern;
a measurement camera operably coupled to the noncontact measurement device;
a first color camera having a first quality parameter; and
a second color camera operably coupled to the noncontact measurement device, the second color camera having a second quality parameter, the second quality parameter being larger than the first quality parameter; and
one or more processors operably coupled to the noncontact measurement device, the one or more processors operable to execute computer instructions when executed on the processor for determining 3D coordinates of at least one point in a field of view and selectively acquiring an image with the second color camera.

2. The system of claim 1, wherein the processor is further operable to register the high quality image to the at least one point.

3. The system of claim 1, wherein the processor is further operable to associate a color data from the high quality image on the at least one point.

4. The system of claim 1, wherein:
the at least one point includes a plurality of points, the plurality of points includes a first plurality of points and a second plurality of points;
the processor is further operable to determine an area of interest from the image and registers the first plurality of points with the area of interest; and
the processor is further operable to delete the second plurality of points.

5. The system of claim 1, wherein the noncontact measurement device further includes a user interface.

6. The system of claim 5, wherein the processor is further operable to:
determine a surface of interest based at least in part on the image;
determine a point density of the surface of interest after an initial scan with the noncontact measurement device; and
displaying an indicator of the point density on the user interface.

7. The system of claim 6, wherein the processor is further operable to:
compare the point density of the surface of interest to a threshold;
display a first indicator on the user interface for a first portion of the surface of interest that are less than the threshold; and
display a second indicator on the user interface for a second portion of the surface of interest that is greater than the threshold.

8. The system of claim 1, wherein the image is acquired in response to a user input, a signal from a remote computer, or based at least in part on an analysis of the three-dimensional coordinate data.

9. The system of claim 1, wherein the second color camera is the same as the first color camera and the second quality parameter is different from the first quality parameter.

10. The system of claim 1, wherein the one or more processors are responsive to determine three-dimensional data by photogrammetry using multiple images from the second color camera.

11. A method comprising:
emitting a pattern of light with a projector of a noncontact measurement device;
acquiring point data about a plurality of points on a surface with a measurement camera of a noncontact measurement device;
acquiring a first color image of the surface with a first color camera of the noncontact measurement device, the first color camera having a first quality parameter;
determining 3D coordinates of the plurality of points based at least in part on the point data and the baseline distance between the projector and the measurement camera; and
selectively acquiring a second color image of the surface with a second color camera in response to an input from an operator, the high quality camera being operably coupled to the noncontact measurement device and having a second quality parameter, the second quality parameter being different than the first quality parameter.

12. The method of claim 10, further comprising registering the second color image to the at least one of the plurality of points.

13. The method of claim 10, further comprising associating color data from the second color image to a portion of the plurality of points.

14. The method of claim 10, wherein the plurality of points includes a first plurality of points and a second plurality of points.

15. The method of claim 14, further comprising:
determining an area of interest from the image;
registering the first plurality of points with the area of interest; and
deleting the second plurality of points.

16. The method of claim 10, further comprising:
determining a surface of interest based at least in part on the image;
determining a point density of the surface of interest after an initial scan with the noncontact measurement device; and
displaying an indicator of the point density on a user interface, the user interface being operably coupled to the noncontact measurement device.

17. The method of claim 16, further comprising:
comparing the point density of the surface of interest to a threshold;
displaying a first indicator on the user interface for a first portion of the surface of interest that are less than the threshold; and
displaying a second indicator on the user interface for a second portion of the surface of interest that is greater than the threshold.

18. A computer program product for determining three dimensional coordinates using a noncontact measurement device, the computer program product comprising a nontransitory computer readable storage medium having program instructions embodied therewith, the program instructions executable by a processor to cause the processor to perform:
emitting a pattern of light with a projector of a noncontact measurement device;
acquiring point data about a plurality of points on a surface with a measurement camera of a noncontact measurement device;
acquiring a first color image of the surface with a first color camera of the noncontact measurement device, the first color camera having a first quality parameter;
determining 3D coordinates of the plurality of points based at least in part on the point data and the baseline distance between the projector and the measurement camera; and
selectively acquiring a second color image of the surface with a second color camera in response to an input from an operator, the high quality camera being operably coupled to the noncontact measurement device and having a second quality parameter, the second quality parameter being different than the first quality parameter.

19. The computer program product of claim 18, further comprising registering the second color image to the at least one of the plurality of points.

20. The computer program product of claim 18, further comprising associating color data from the second color image to a portion of the plurality of points.

21. The computer program product of claim 18, wherein the plurality of points includes a first plurality of points and a second plurality of points.

22. The computer program product of claim 21, further comprising:
determining an area of interest from the image;
registering the first plurality of points with the area of interest; and
deleting the second plurality of points.

23. The computer program product of claim 18, further comprising:
determining a surface of interest based at least in part on the image;
determining a point density of the surface of interest after an initial scan with the noncontact measurement device; and
displaying an indicator of the point density on a user interface, the user interface being operably coupled to the noncontact measurement device.

24. The computer program product of claim 23, further comprising:
comparing the point density of the surface of interest to a threshold;
displaying a first indicator on the user interface for a first portion of the surface of interest that are less than the threshold; and
displaying a second indicator on the user interface for a second portion of the surface of interest that is greater than the threshold.

25. A three-dimensional (3D) measurement system comprising:
a noncontact measurement device operable to measure a distance from the noncontact measurement device to a surface, the noncontact measurement device including:
a projector that emits a light pattern;
a measurement camera operably coupled to the noncontact measurement device;
a color camera; and
one or more processors operably coupled to the noncontact measurement device, the one or more processors operable to execute computer instructions when executed on the processor for:
selectively acquiring an image with the color camera;
determining 3D coordinates of at least one point in a field of view and determining a position registration through optical tracking based at least in part on the image, wherein the at least one point includes a plurality of points, the plurality of points includes a first plurality of points and a second plurality of points;
determining an area of interest from the image and registers the first plurality of points with the area of interest; and
deleting the second plurality of points.

26. A three-dimensional (3D) measurement system comprising:
a noncontact measurement device operable to measure a distance from the noncontact measurement device to a surface, the noncontact measurement device including:
a projector that emits a light pattern;
a measurement camera operably coupled to the noncontact measurement device;
a color camera operable to selectively operate at a first quality parameter and a second quality parameter;
a user-interface; and
one or more processors operably coupled to the noncontact measurement device, the one or more processors operable to execute computer instructions when executed on the processor for:
selectively acquiring a first image with the color camera operating at the first quality parameter;
selectively acquiring a second image with the color camera operating at the second quality parameter; and
determining 3D coordinates of at least one point in a field of view and determining a position registration through optical tracking based at least in part on the image.

27. The system of claim 26, wherein the processor is further operable to:
determine a surface of interest based at least in part on the image;
determine a point density of the surface of interest after an initial scan with the noncontact measurement device; and
displaying an indicator of the point density on the user interface.

28. The system of claim 27, wherein the processor is further operable to:
compare the point density of the surface of interest to a threshold;
display a first indicator on the user interface for a first portion of the surface of interest that are less than the threshold; and
display a second indicator on the user interface for a second portion of the surface of interest that is greater than the threshold.
